# EUROPEAN PATENT SPECIFICATION

(11) **EP 0 474 071 B1**
(45) Date of publication and mention of the grant of the patent: **29.03.1995**
(21) Application number: 91114201.6
(22) Date of filing: 24.08.1991
(51) Int. Cl.: A01G 9/10

(54) **Assembly of pots for raising and transplantation**
Topfsatz zum Züchten und Verpflanzen
Assemblage de pots pour cultiver et repiquer

(30) Priority: 30.08.1990 JP 90087/90 U
(43) Date of publication of application: 11.03.1992
(73) Proprietor: NIHON TENSAISEITO KABUSHIKI KAISHA, Chuo-ku Tokyo (JP)
(72) Inventor: Masashi, Tanimura, Nishi 21-banchi, Obihiro-shi, Hokkaido (JP); Ryuzo, Tsuru, Hokkaido (JP); Michinori, Sakaki, Hokkaido (JP); Sumio, Ito, Nishi 20-chome, Hokkaido (JP); Hidekazu, Terasawa, Obihiro-shi, Hokkaido (JP)
(74) Representative: Patentanwälte Wenzel & Kalkoff

(56) References cited:
- DE-A- 3 310 883
- NL-A- 8 403 665
- US-A- 3 164 507
- US-A- 4 167 911

## Description

### BACKGROUND OF THE INVENTION

### Field of the Invention

The present invention concerns an assembly of pots for raising and transplantation (hereinafter simply referred to as pots) and, more in particular, it relates to pots whose sidewalls being made of paper or paper-liked thin layer and not having lid and bottom.

### Description of the Prior Art

A culture method of plants raising seedlings by using a pot made of paper or paper-like thin layer and then transplanting the thus obtained potted seedlings to a field has been generally used so far.

Most of such pots used for the culture of the plants are of a cylindrical form with no lid and bottom in which soils are charged, seeds are sown, watering is applied and then seedlings are raised for a predetermined period and the resultant seedlings are transplanted together with the pot to a field.

After the transplantation, since the pot is gradually decomposed by corrosion in the earth, roots of the seedlings can be freely formed and extended to make the subsequent growth favorable. However, since the corrosive decomposition of the pot may be retarded depending on the kind of the field soils, extension of the roots out of the pot is inhibited under such a state to hinder rooting and subsequent growth thereof.

In order to overcome such a disadvantage, there have been proposed, for example, a cylindrical pots each opened at both upper and lower ends and having a plurality rows of through holes at the circumferential surface thereof as disclosed in the specification of Japanese Utility Model Laid-Open Sho 59-193251 and pots each of a structure in which small apertures are perforated in the circumferential surface of the pot so as not to be in communication with each other between adjacent pots as disclosed in Japanese Utility Model Publication Sho 51-12362.

However, the pots apertured with small holes at the side wall of the pot involve the following problem to be overcome upon practical use.

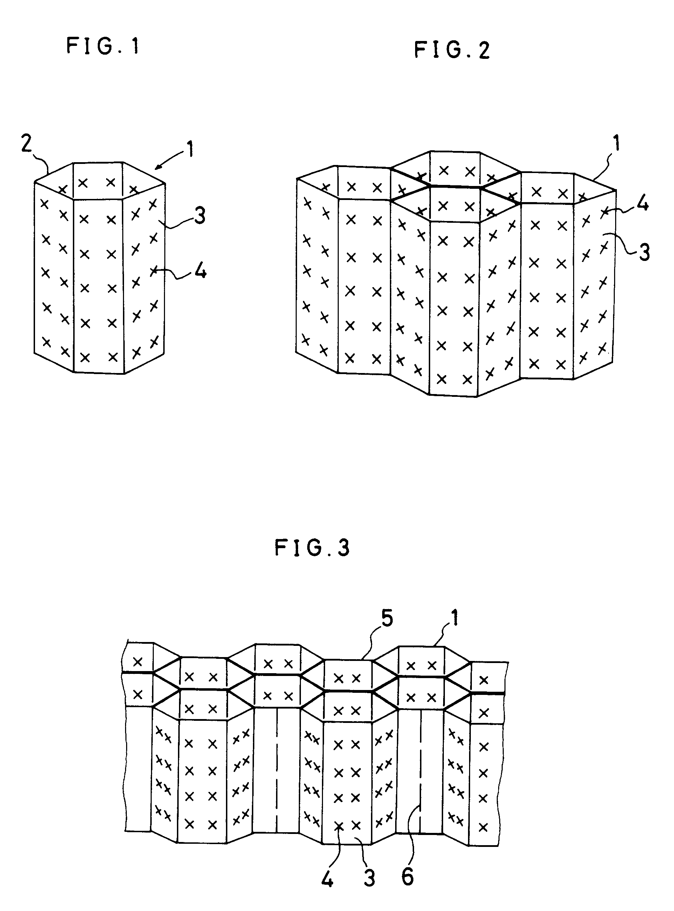

That is, in the pots of the cylindrical form opened at both upper and lower ends and having a plurality of through holes formed in the circumferential surface as disclosed in Japanese Utility Model Laid-Open Sho 59-193251, since the through holes in the side walls of the individual pots are made uniform (refer to Fig. 1 of the publication), when the pots are used for raising as an assembly of pots by making the side walls of the pots in adjacent with each other and bonded and assembled together, through holes in the side walls of adjacent pots are in communicate with each other (refer to Fig. 2 of the publication), roots of seedlings in adjacent pots entangle to each other through the communication holes during raising making it difficult to separate them into individual potted seedlings after the completion of the raising. Further, in the pots of the structure having small apertures perforated such that they are not in communication with each other in the circumferential side between adjacent pots as disclosed in the specification of the Japanese Patent Publication Sho 51-12362, entanglement of roots between the adjacent pots are not caused during raising, different from the pots disclosed in Japanese Utility Model Laid-Open Sho 59-193251, but an extremely complicate manufacturing step is actually required for providing such a structure that small apertures perforated to the side walls are not in communication with each other between the adjacent pots.

In addition, individual pots are usually assembled by a step of forming a stripe-like body by successively connecting a predetermined number of collapsed hollow cylindrical bodies while overlapping them each at a 1/2 or 1/3 width to each other, laminating a predetermined number of such stripe-like bodies and bonding the adjacent layers by means of a water soluble starch. However, in the two types of the pots as described above, since openings or small holes are formed to a portion constituting the side walls of the pot upon development, starches coated between the adjacent laminated layers adhere the surfaces not required to be bonded through the openings or small holes to hinder the satisfactory development of the assembled pots.

In view of the foregoing situations, it has been demanded for the provision of pots for rearing and transplantation free from structural problems and enabling vigorous extension of roots out of the pots after transplantation.

### SUMMARY OF THE INVENTION

The foregoing demand can be satisfied in accordance with the present invention by an assembly of pots for raising and transplantation, pots whose sidewalls being made of paper or paper-like thin layer and not having lid and bottom, said assembly being characterized in that cuts each of a shape forming at least one tongue-like piece allowing roots growing through the sidewalls and extending outside are provided at a plurality of positions to a sidewall of each pot.

### BRIEF DESCRIPTION OF THE DRAWINGS

Fig. 1 to Fig. 3 show examples of pots for raising and transplantation according to the present invention; in which
Fig. 1 is a perspective view of an unit pot of a hexagonal shape provided with cross-like cuts on the side wall of the pot;
Fig. 2 is a perspective view illustrating a state of assembling unit pots and
Fig. 3 is a perspective view illustrating the state in which unit pots are connected in a row by way of connection, pieces;
Fig. 4(a) - (d) illustrate examples of various kind of shapes of the cut that can be employed in the present invention in which

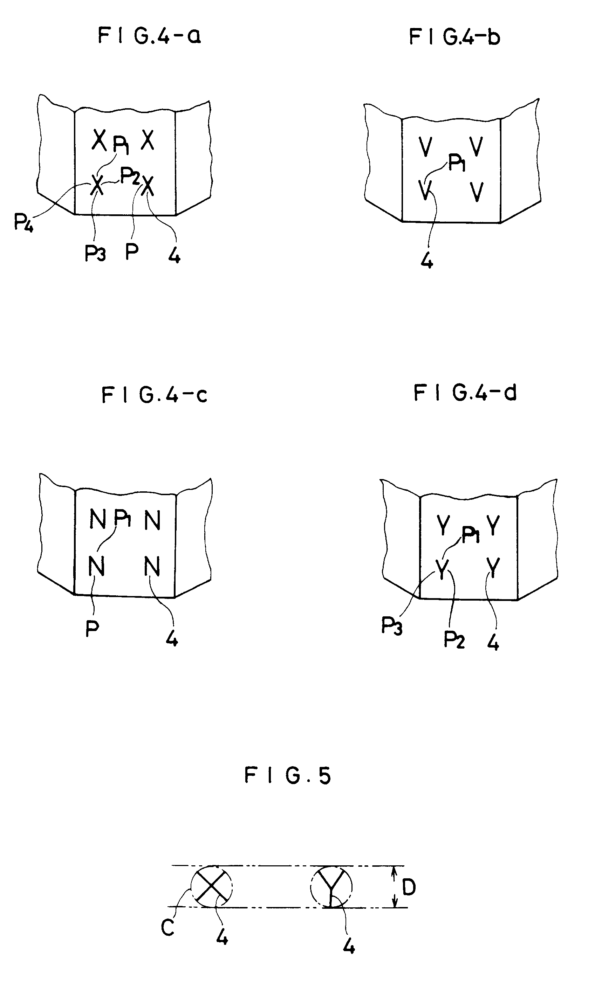

Fig. 4a shows an example of a cross-like configuration,
Fig. 4b shows an example of a V-letter-shaped configuration,
Fig. 4c is an example of an N-letter-shaped configuration,and
Fig. 4d shows an example of an Y-letter-shaped configuration; and
Fig. 5 is a schematic view for illustrating the range or extent of the cut by a circle C connecting respective ends of the cut.

### DETAILED DESCRIPTION OF THE PREFERRED EMBODIMENTS

As the paper or paper-like thin layer for constituting a pot for raising and transplantation according to the present invention, any of thin layer materials having appropriate corrosion resistance and appropriate rigidity used for the constitution of existent pots may be used. There can be mentioned, for example, natural pulp paper or synthetic paper made from paper material such as usual paper making natural pulps, for example , wood pulps prepared from wood such as coniferous trees and broad leaf trees waste cloth or paper pulp or bagasse pulp, alone or in admixture with synthetic fibers such as made of polyvinyl alcohol, polypropylene, polyethylene, polyolefin, polyester, polyamide, polyacrylonitrile and polyvinyl chloride, paper reinforced with wet strength by treating such natural paper or synthetic paper with cellulose crosslinking chemicals, composite paper prepared by laminating a thin layer of the synthetic fibers with the natural pulp paper by an appropriate means, and paper applied with corrosion resistant treatment by means of properly selected corrosion resistant chemicals to natural pulp paper or synthetic paper.

In Fig. 1, a unit pot (hexagonal column in the figure) 1 comprises a thin layer 2 properly selected from the group of various thin layer materials as described above.

A side wall 3 of the pot made of the thin film 2 is provided with a plurality of cuts 4, for example, of a cross-like shape passing through the thin layer 2.

The shape of the cut 4 provided to the side wall 3 of the pot is not restricted to the illustrated cross-like shape but various kinds of shapes may be used. In this case, the shape of the cut 4 is provided such that at least one tongue-like piece P is formed as described later.

Further, considering that no entanglement of roots is caused through the cuts 4 between adjacent pots during raising, the tongue-like piece formed by the cut 4 can easily lift-up out of the pot by the pressure of the roots after transplantation and starch coated upon fabrication of the pot does not intrude into the recess to cause unnecessary adhesion as described later, the size of the cut 4 is preferably selected, as shown in Fig. 5, so that the diameter D for a circle C drawn by connecting respective ends of the cut 4 provided to the side wall 3 defines a range about from 5 to 15 mm. So long as this condition is satisfied, the shape of the recess is not restricted only to the cross-like shape that forms four tongue-like pieces P₁ - P₄ as shown in Fig. 4-a, but the cut may be provided such that in the form of V-shape, N-shape and Y-shape as shown in Fig. 4-b through Fig. 4-d. In the latter cases, the tongue-like piece is formed by one (P₁), two (P₁, P₂) and three (P₁, P₂, P₃) respectively.

As described above, while the shape for the cut 4 can be selected optionally, the cross-like and Y-letter shaped configuration in which top ends of the tongue-like pieces P are gathered into a point are more practical and preferred since the tongue-like pieces can lift-up more easily out of the pot by the pressure of the root.

The cut 4 can be provided easily by applying a fabrication to a thin layer 2 or a stripe-like body in the manufacturing step by using a diecut equipment, a sharecut equipment or the like having a blade die corresponding to the properly selected shape of the cut 4.

The assembly of pots shown in Fig. 2 has a shape an identical structure with that of the assembly of pots as described, for example, in U.S. Patent No.3164507 or British Patent No. 992856 (however, cutting treatment is not applied at all to the side walls in this prior art). The assembly of pots having the cut 4 to the side wall of the pot of such a structure can be obtained by providing cross-like or like other cuts 4 to a preselected thin layer 2 by means of the die cut equipment or the share cut equipment described above (while keeping the cut 4 from being extended to both side edges of a collapsed hollow cylindrical body formed with the thin layer 2 described later), preparing a plurality of collapsed hollow arranging a predetermined number of the collapsed hollow cylindrical bodies in a lateral direction while successively overlappping them each by 1/3 lateral width to each other alternately and vertically bonding the overlapped portions with water soluble starch to form a stripe-like body, laminating a predetermined number of stripes, bonding each of adjacent layers with water soluble starch, drying and then developing them. However, when each of connected collapsed hollow cylindrical bodies are bonded to each other by the water soluble starch, and when a predetermined number of stripe-like bodies formed with the collapsed hollow cylindrical bodies are laminated and the adjacent layers are bonded by the water soluble starch since the width of the cut 4 is extremely fine, the starch coated over the cut 4 does not substantially penetrate the starch 4 and adheres the opposing face. Then, there is no disadvantage of hindering the development into the pots after the completion of the assembling.

Further, the assembly of pots shown in Fig. 3 has the same structure as that of the assembly of pots in which individual pots are connected in a row by means of connection pieces 5 as disclosed in, for example, U.S. patent No. 4132337 or Great Britain Patent No. 1559343 (however, no cutting treatment is applied at all to the side wall in this prior art). The assembly of the pots having the cut 4 to the side wall of the pot of this structure is formed, for example, by mating the two thin layers 2 in parallel, appending the two sheets by means of a water resistant starch coated at a predetermined pattern with a predetermined interval in the longitudinal direction of the thin layer 2 and in the direction in perpendicular to the longitudinal direction of the thin layer to form a continuous stripe-like body, providing cross-like or other cut 4 to the stripe at the area except for the appended area by the water resistant starch by using, for example, a diecut equipment or a sharecut equipment, applying easily separatable separation lines 6 to that portion by an appropriate means in a connection piece formed by appending with the water resistant starch, folding the stripe-like body in a zig-zag form by a predetermined manner, pressing to append the entire portion and drying them developing the bonded body. Also in this case, since the width of the cut 4 is extremely fine the starch coated over the cut 4 does not substantially append the opposing face through the cut 4 and, therefore, cause no disadvantage of hindering the development into the pot after the completion of the assembling.

In this way, an assembled or not-assembled raising pot having a cut 4 to the side wall of the pot according to the present invention can be obtained. The pot for raising and transplantation according to the present invention is not restricted only to this illustrated embodiment but various kinds of structures and forms may be provided to the pot having the cut 4 to the side wall of the pot.

When soils are charged, seeds are sown and water is applied for raising to the thus assembled pots, for example, as shown in Fig. 2 provided with the cut 4 to the side wall 3 according to the present invention as described above, the tongue-like pieces formed by the provision of the cuts 4 constitute "doors" between each of the adjacent pots during raising to prevent entanglement of the roots between the adjacent pots. After separation into individual pots after the raising and transportation to the field, since the tongue-like pieces P can easily lift-up to the outside of the pot due to the embrittlement of the thin layer being in coupled with the extending pressure of the roots, making the extension of the roots easy through the portions, early rooting is enabled for the transplanted seedlings and subsequent growth is made smooth.

In the pot for raising and transplantation according to the present invention, since the extention of roots through the side wall of the pot is facilitated irrespective of the kinds of soils of the transplanted field, an advantage of plant culture technique by using pots can further be improved.

For better understanding of the present invention, manufacturing examples and test examples are shown below.

### Manufacturing Example 1

### Non-continuous hexagonal assembly of pots

A continuous craft paper with 60 g/m² unit area weight and with 126 mm of width to which 3% of benzoimidazole series sterilizer was added by 3% based on the weight of the paper was continuously drawn out, and 6 mm width on one side edge was used as glued area. Y-letter shaped cuts each having 5 mm fragments were continuously formed to other area of the paper except for the glued area by a rotary die cutter set to a lateral distance of 20 mm from the other side edge and 25 mm distance in the drawing direction while adjusting the position such that the initial position for the recess was at 12.5 mm from the top end of the craft paper. Water resistant starch was coated to the glued area of 6 mm width and then the other side edge was mated and bonded, and collapsed to form a continuous collapsed hollow cylindrical body of 60 mm width.

Eight rows of such continuous collapsed hollow cylindrical bodies were prepared and they were connected successively while overlapping to each other each by 1/3 width being arranged in the lateral direction alternately and vertically.

The continuous stripe-like bodies was cut into a piece of 150 mm length, 18 sheets of such pieces were laminated and appended to each other by means of a water soluble starch. Then, they were cut into a length of 50 mm and developed to obtain three sets of non-continuous pots for raising and transplantation assembled laterally and longitudinally from 144 (one set) hexagonal pots with 40 mm diameter and 60 mm height having two Y-letter-shaped cuts not extended over the folded lines to each of the side walls of the pots divided by the folded lines upon development. The development could be attained satisfactorily with no deformation of the shape and unnecessary adhesion to other surface through the cuts was not observed.

### Manufacturing Example 2

### Non-continuous square cylindrical assembly of pots

A continuous craft paper with of unit area weight of 55 g/m² and with width of 206 mm to which 2% of 8-oxyquinoline copper type sterilizer was added based on the weight of paper was continuously drawn out. Water resistant starch was coated to 6 mm width on one lateral side as a glued area, the other side is mated thereto, appended and collapsed to form a continuous collapsed hollow cylindrical body.

Six rows of such continuous collapsed hollow cylindrical bodies were prepared and they were connected while being overlapped each by 1/2 width to each other such that they constitute step-width arrangement in the lateral direction and each of adjacent rows was bonded by a water soluble starch to form continuous stripe-like body of 350 mm width.

N-letter-shaped cuts each with 7 mm fragment were continuously formed to the continuous stripe-like body while adjusting the position such that the initial position of the cut was situated at 12.5 mm from the top end of the continuous stripe-like body and the positions for the both sides were situated at 15 mm inward respectively from the both side edges by a rotary diecutter which was set to the lateral distance of 20 mm, 30 mm (repetition of 20 mm, 30 mm), 30 mm and 20 mm distance and 25 mm distance in the longitudinal direction, and then they were cut into pieces of 100 mm length. 12 sheets of such pieces were turned front to back on every another sheets and laminated, The laminates were bonded by means of a water soluble starch and then they were cut into 50 mm length and developed to obtain two sets of non-continuous pots for raising and transplantation in which 72 (one set) square cylindrical pots each having 50 mm side and 50 mm height having two N-letter-shaped cuts formed to the side walls of the pot divided by the folding lines laterally and longitudinally upon development. Development could be attained satisfactorily with no deformation and unnecessary adhesion to other faces through the cuts was not observed.

### Manufacturing Example 3

### Continuous type hexagonal assembly of pots

Continuous synthetic fiber-mixed craft paper of 55 g/m² of weight per unit area and 414 mm of width mixed with 2% of 8-oxyquinoline copper type sterilizer and 10% by weight of polypropylene fibers was drawn out. Then, a water resistant starch was coated on the surface of the drawn paper in perpendicular to the drawing direction by continuously repeating units each unit having 6 repetition of a starch coating pattern comprising 15 mm width of starch coating area and successive 45mm width of non-starch coating area in perpendicular to the drawing direction. Then, the same separately prepared paper was mated and appended to form a continuous stripe body comprising the appended area and the non-appended area alternately.

Then, cross-like cuts each of 6 mm entire length were provided continuously to the continuous stripe-like body while adjusting the initial position of the cuts at 7.5 mm from the top end of the stripe-body and at 11.5 mm from one side edge by using a rotary die cutter which was set to 23 mm of lateral distance and 15 mm of distance in the drawing direction. Then, separation lines were attached over the entire width of the appended area of the water resistant starch of 15 mm width situated at the front end in each of the units, and they were folded in the zig-zag manner by 44 times with the boundary between the appended area by the water resistant starch and the non-appended area, situated at the final area of each unit as the folding portion and then laminated and bonded by the water soluble starch.

The laminate was cut laterally into 46 mm length and developed to obtain a continuous pot for raising and transplantation in which 264 of hexagonal pots each of 30 mm diameter and 46 mm height having two cross-like cuts not extended over the folding lines to the side wall for each of the pots divided by the folded lines are assembled so as to be drawable in a row by connection pieces formed with the appended area by the water resistant starch. Development could be attained with no deformation satisfactorily and adhesion to other unnecessary faces through the cut was not observed.

### Culture Test Example

Assembly of pots (2 sets) each having cuts on the side wall of pots (non-continuous type) formed in Manufacturing Example 1 and non-continuous hexagonal assemblies of pots having no cuts in the side wall of the pots formed in the same manner as in the example except for not providing the cuts (comparative pots 2 sets) were used. Culture soils were charged into each of the pots, seeds of cabbage were sown by one/pot and after raising under the same conditions in a greenhouse for 21 days, they were transplanted to a field in the greenhouse and tested for growing and harvest.

The results are as shown in Table 1 and it was recognized that culture in the pot of Example 1 was superior to the case of the Comparative pot in each of the test items. In particular, for the number of roots penetrating the pots, the pot of Example 1 showed a remarkable effect due to the cuts showing ten times as much as results as compared with the control pot. As a result, the example showed 35% increase in the yield.

The data shows an average value per one pot and is indicated based on the result of the control pot being assumed as 100.

**Table 1**

| | Situation 30 days after transplantation | | | | 50 days after transplantation |
|---|---|---|---|---|---|
| | Leaf length (cm/pot) | Number of leaves (sheets/pot) | Leaf weight (g/pot) | number of roots penetrating pot (number/pot) | yield (g/pot) |
| Control pot | 100 | 100 | 100 | 100 | 100 |
| Pot of Ex.1 | 109 | 104 | 151 | 1000 | 135 |

## Claims

1. An assembly of pots for raising and transplantation, pots (1) whose sidewalls (3) being made of paper or paper-like thin layer (2) and not having lid and bottom, said assembly being characterized in that cuts (4) each of a shape forming at least one tongue-like piece allowing roots growing through the sidewalls (3) and extending outside are provided at a plurality of positions to a sidewall (3) of each pot (1).

2. An assembly of pots for raising and transplantation as defined in claim 1, wherein the cut (4) provided to the side wall (3) of a pot (1) is a cross-like shape.

3. An assembly of pots for raising and transplantation as defined in claim 1, wherein the cut (4) provided to the side wall (3) of a pot (1) is a Y-letter-shaped cofiguration.

4. An assembly of pots for raising and transplantation as defined in any one of claims 1 to 3, wherein the size of cut (4) is set such that the diameter (D) of a circle (C) drawn by connecting respective ends of the cut (4) defines a range of about 5 to 15 mm.

5. An assembly of pots for raising and transplantation as defined in any one of claims 1 to 4, wherein the cut (4) has such an extremely fine width that a substantial amount of starch to bond the opposing surface of the pot (1) is not allowed to pass through the cut (4).

## Patentansprüche

1. Topfsatz zum Aufziehen und Verpflanzen, wobei die Töpfe (1), deren Seitenwände (3) aus Papier oder papierähnlichem dünnen Schichtmaterial (2) hergestellt sind, keinen Deckel und Boden aufweisen, wobei der Topfsatz dadurch **gekennzeichnet** ist, daß Einschnitte (4), deren jeder eine derartige Gestalt besitzt, daß er mindestens ein zungenähnliches Stuck ausbildet, um zu erlauben, daß Wurzeln durch die Seitenwände (3) wachsen und sich nach außen erstrecken, an mehreren Stellen einer Seitenwand (3) eines jeden Topfes (1) vorgesehen sind.

2. Topfsatz zum Aufziehen und Verpflanzen gemäß Anspruch 1, bei dem der in der Seitenwand (3) eines Topfes (1) vorgesehene Einschnitt (4) eine kreuzähnliche Gestalt besitzt.

3. Topfsatz zum Aufziehen und Verpflanzen gemäß Anspruch 1, bei dem der in der Seitenwand (3) eines Topfes (1) vorgesehene Einschnitt (4) eine Gestalt ähnlich der des Buchstabens Y besitzt.

4. Topfsatz zum Aufziehen und Verpflanzen nach einem der Ansprüche 1 bis 3, bei dem die Größe des Einschnitts (4) so gewählt ist, daß der Durchmesser (D) eines durch die betreffenden Enden des Einschnitts (4) gezogenen Kreises (C) im Bereich von etwa 5 bis 15 mm liegt.

5. Topfsatz zum Aufziehen und Verpflanzen nach einem der Ansprüche 1 bis 4, bei dem der Einschnitt (4) eine solch extrem geringe Weite hat, daß keine wesentliche Menge der zum Verbinden der gegenüberliegenden Flächen des Topfes (1) benutzten Stärke durch den Einschnitt (4) hindurchtreten kann.

## Revendications

1. Assemblage de pots pour cultiver et repiquer, pots (1) dont les parois latérales (3) sont en papier ou en une couche mince semblable à du papier (2) sans couvercle et sans fond, ledit assemblage étant caractérisé en ce que des coupures (4) chacune d'une forme formant au moins une pièce du type languette permettant aux racines de pousser à travers les parois latérales (3) et de s'étendre à l'extérieur sont ménagées à une pluralité de positions dans une paroi latérale (3) de chaque pot (1).

2. Assemblage de pots pour cultiver et repiquer selon la revendication 1, dans lequel la coupure (4) ménagée dans la paroi latérale (3) d'un pot (1) a une forme de type croix.

3. Assemblage de pots pour cultiver et repiquer selon la revendication 1, dans lequel la coupure (4) ménagée dans la paroi latérale (3) d'un pot (1) a une configuration en forme d'Y.

4. Assemblage de pots pour cultiver et repiquer selon l'une des revendications 1 à 3, dans lequel la taille de la coupure (4) est fixée telle que le diamètre (D) d'un cercle (C) dessiné en reliant les extrémités respectives de la coupure (4) définit un ordre de grandeur d'environ 5 à 15 mm.

5. Assemblage de pots pour cultiver et repiquer selon l'une des revendications 1 à 4, dans lequel la coupure (4) a une largeur extrêmement fine telle qu'une quantité substantielle d'amidon pour coller la surface opposée du pot (1) ne peut pas traverser la coupure (4).
